# FASCICULE DE BREVET EUROPEEN

(11) **EP 3 833 497 B1**
(45) Date de publication et mention de la délivrance du brevet: **20.07.2022**
(21) Numéro de dépôt: 19759672.9
(22) Date de dépôt: 07.08.2019
(51) Int. Cl.: B22C 1/00, B22C 3/00, B22C 9/10, B22C 9/12

(54) **REVETEMENT CERAMIQUE POUR NOYAU DE FONDERIE**
KERAMISCHE BESCHICHTUNG FÜR GIESSKERN
CERAMIC COATING FOR FOUNDRY CORE

(30) Priorité: 07.08.2018 FR 1800850
(43) Date de publication de la demande: 16.06.2021
(73) Titulaire: Commissariat à l'Energie Atomique et aux Energies Alternatives, 75015 Paris (FR); SAFRAN, 75015 Paris (FR)
(72) Inventeur: BECHELANY, Mirna, 77550 Moissy-Cramayel (FR); JAQUET, Virginie, 77550 Moissy-Cramayel (FR); SABOUNDJI, Amar, 77550 Moissy-Cramayel (FR); SOULIER, Mathieu, 38430 Saint Jean De Moirans (FR); BOIDOT, Mathieu, 38610 Gieres (FR); LAUCOURNET, Richard, 38500 La Buisse (FR)
(74) Mandataire: Regimbeau
(86) Numéro de dépôt international: PCT/FR2019/051917
(87) Numéro de publication internationale: WO 2020/030881

(56) Documents cités:
- WO-A1-2018/071287
- WO-A2-2007/089666
- FR-A1- 3 060 600
- US-A- 5 635 250
- US-A1- 2005 230 078
- US-A1- 2007 235 158

## Description

### DOMAINE TECHNIQUE GÉNÉRAL ET ART ANTÉRIEUR

L'invention concerne le domaine des revêtements de protection pour les pièces mécaniques, plus précisément les revêtements pour noyaux de fonderie.

Au cours d'un procédé de fabrication par fonderie, des noyaux sont classiquement disposés dans des moules de fonderie, préalablement à l'injection du métal liquide, de manière à réaliser une ou plusieurs cavités ou évidements dans les pièces qui seront réalisées lors du procédé de fabrication.

Ces noyaux sont classiquement réalisés en céramiques réfractaires.

Alternativement, il est connu d'utiliser des noyaux de fonderie réalisés en alliages réfractaires en remplacement ou en complément des noyaux céramiques classiquement utilisés.

Ces matériaux en alliages réfractaires, typiquement des alliages de molybdène, doivent être revêtus d'une couche de protection pour préserver leurs caractéristiques mécaniques, notamment en présence de températures très élevées rencontrées par exemple lors de processus de fabrication d'aubes en superalliage pour turbomachines.

Dans le cas de procédés de fonderie à la cire perdue, des carapaces en matériau réfractaire sont réalisées autour d'un modèle en cire de la pièce à réaliser, de manière à former un moule du modèle de la pièce. La carapace est ensuite chauffée pour être consolidée, la cire étant évacuée préalablement dans un autoclave sous vapeur d'eau pour réaliser une empreinte de la forme externe de la pièce à réaliser.

Un noyau peut être disposé initialement dans le modèle cire et présent avant la coulée du matériau constitutif de la pièce à réaliser, le noyau définissant la forme interne de la pièce.

Dans le cas de la réalisation d'aubes de turbomachine, typiquement d'aubes de turbine en superalliage en moulage à la cire perdue, la consolidation de la carapace des aubes est réalisée sous air à une température supérieure à 1000°C, des phénomènes d'oxydation importants peuvent être rencontrés, notamment pour le métal réfractaire qui constitue une partie du noyau ou le noyau complet.

En effet, le molybdène par exemple, qui peut être utilisé comme insert dans un noyau céramique ou qui peut constituer tout le noyau, réagit, lorsqu'il est non revêtu, avec l'oxygène à partir de 400°C pour former jusqu'à 650°C le dioxyde de molybdène (MoO₂) puis du trioxyde de molybdène au-delà de 650°C, le trioxyde de molybdène étant très volatile. La vitesse d'oxydation du molybdène suit de manière connue une augmentation linéaire entre 400 et 650°C et une augmentation exponentielle au-delà jusqu'à 1700°C.

Alternativement, il est connu d'utiliser un alliage à base de molybdène comportant du zirconium et du titane (alliage TZM), plus facilement usinable et qui présente une résistance mécanique supérieure au molybdène à température ambiante. Le TZM est connu pour s'oxyder à partir de 540°C et l'oxydation devient exponentielle à partir de 790°C avec une volatilisation rapide du substrat TZM (dans le domaine des revêtements de surface, le substrat est le matériau composant la pièce à revêtir).

Cette oxydation très importante des pièces molybdène ou TZM entraîne une perte de masse non négligeable, et une dégradation rapide des propriétés mécaniques.

Après la consolidation sous air de la carapace, le superalliage est fondu et coulé sous vide dans la carapace, entrant alors en contact avec l'alliage réfractaire.

L'étape de coulée, réalisée sous vide à une température supérieure à 1500°C, entraîne notamment des phénomènes de diffusion d'éléments du superalliage dans l'alliage réfractaire du noyau.

Une inter diffusion des éléments de l'alliage réfractaire du noyau vers le superalliage peut entraîner une modification des propriétés mécaniques du superalliage, et donc entraîner une dégradation des performances de la pièce obtenue.

Il est connu de réaliser des revêtements en polymère précéramique pour des pièces métalliques.

La voie « polymère précéramique » est une méthode de synthèse permettant de fabriquer des céramiques homogènes et de haute pureté chimique. En raison d'un contrôle des propriétés viscoélastiques et de la composition à l'échelle atomique des polymères, il est en particulier possible de générer des céramiques dans la forme et la composition souhaitée.

Les classes les plus connues des céramiques obtenues par cette voie chimique sont les systèmes binaires Si₃N₄, SiC, BN et AIN, les systèmes ternaires SiCN, SiCO et BCN ainsi que les systèmes quaternaires SiCNO, SiBCN, SiBCO, SiAICN et SiAlCO.

L'emploi des précurseurs céramiques ou polymères précéramiques pour élaborer des revêtements de protection est encourageant puisque par comparaison aux techniques usuelles, cette voie se réalise à plus basse température et sans additifs de frittage. Il est entendu par polymères précéramiques des polymères qui après pyrolyse sont convertis en céramique.

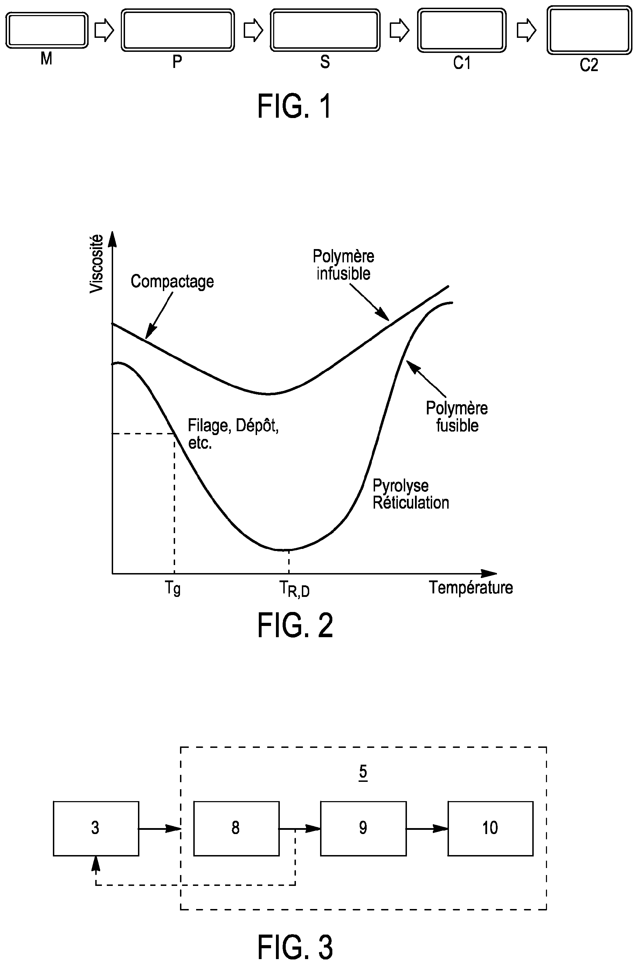

Le procédé de formation d'un revêtement au moyen d'un polymère précéramique, illustré en figure 1, se décompose en quatre étapes :
1) Synthèse d'un précurseur moléculaire, ou monomère M.
2) Conversion du précurseur moléculaire en un polymère inorganique P1 de composition chimique et d'architecture contrôlée, en réalisant une étape de polymérisation. Ce polymère est conçu pour présenter une aptitude à la mise en forme (i.e. polymère fusible ou soluble). Le polymère inorganique est préférentiellement constitué du réseau de base de la céramique d'où sa dénomination précéramique.
3) Mise en forme du polymère par des techniques traditionnelles telles que l'enduction, l'infiltration, le compactage etc. Les propriétés physiques et chimiques du polymère précéramique telles que sa solubilité, sa rhéologie, son degré de réticulation et sa pyrolyse influencent largement la manière avec laquelle peut être façonnée et transformée en forme céramique définie. Le dépôt des revêtements est possible dans une gamme de température où une viscosité adéquate est atteinte mais sans phénomène de réticulation et de décomposition (T < T_{R,D} (température de réticulation et de décomposition)), tel qu'illustré en figure 2.
4) Etape de réticulation du polymère mis en forme qui conduit à l'obtention d'un solide infusible S dont la forme est capable de supporter les étapes ultérieures de traitement thermique et chimique.
5) Etape de céramisation du produit infusible par des traitements thermiques (et éventuellement chimiques) à haute température. Dans cette étape réalisée au moyen d'une étape de pyrolyse, on peut distinguer une phase de minéralisation dans laquelle le solide est transformé en un minéral inorganique C1, réseau (tridimensionnel) de liaisons covalentes, de composition chimique souhaitée, puis une phase de cristallisation dans laquelle le minéral, amorphe, s'organise progressivement en une céramique polycristalline C2 au cours d'une étape de cristallisation.

Les revêtements précéramiques sont réalisés en enduisant une pièce d'un polymère précéramique.

La pièce enduite est ensuite soumise à un traitement thermique qui convertit le polymère précéramique en céramique.

En raison de la différence de densité marquante entre les polymères (de 1 à 1,2 g.cm⁻¹) et les matériaux céramiques (2-3 g.cm⁻¹), un retrait linéaire de plus de 30% entraîne généralement une fissuration étendue et une porosité importante dans le revêtement céramique.

L'apparition de fissures dans le revêtement est particulièrement préjudiciable pour son efficacité. Notamment, toute fissure traversante dans le revêtement met le substrat en alliage réfractaire au contact de l'atmosphère oxydante et rend caduque la protection à l'oxydation du revêtement.

Pour surmonter ce problème, un procédé de modification, appelé AFCOP (de l'anglais *active filler controlled polymer pyrolysis*) a été développé par Greil. On pourra se référer à la publication suivante : Active-Filler-Controlled Pyrolysis of Preceramic Polymers, P. Greil, J. Am. Ceram. Soc. 1995. 78 : p. 835-48. Selon cette méthode, le polymère est partiellement chargé avec des particules de poudre inerte ou active, généralement dans la gamme de 30-50% en volume, pour réduire le retrait et pour permettre l'élaboration des pièces céramiques de qualité. Des « active fillers » ou des charges actives comme le Ti, Nb, Cr, Mo, B, MoSi₂ incorporés dans le polymère peuvent diminuer le retrait occasionné lors de la conversion du polymère en céramique en réagissant avec les produits de décomposition solides et gazeux du précurseur polymérique et/ou l'atmosphère de pyrolyse pour former des carbures, des oxydes, des nitrures ou des siliciures. Cette réaction peut en fait, se produire avec une expansion des charges (filler particles), ce qui neutralise le retrait lors de la densification, et conduit à un composite céramique le plus proche possible de sa forme finale.

Le document US 2007/235158 A1 décrit un procédé de coulée à la cire perdue, dans lequel un noyau composite est une combinaison d'un élément de noyau de coulée en céramique et d'un élément de noyau de coulée non céramique.

Le document US 2005/230078 A1 décrit un procédé de formation d'un moule de coulée à la cire perdue, dans lequel une coquille est appliquée sur un modèle comprenant un corps à base d'hydrocarbures et un noyau de métal réfractaire au moins partiellement noyé dans le corps.

Le document US 5 635 250 A décrit un procédé de préparation d'un matériau céramique à partir d'une combinaison d'un précurseur céramique et de poudres de métal et/ou de céramique.

### PRÉSENTATION GÉNÉRALE DE L'INVENTION

Un but de l'invention est de limiter les phénomènes d'oxydation et d'inter-diffusion lors du traitement thermique d'alliages réfractaires, notamment en présence d'un superalliage pour turbomachine.

Un autre but de l'invention est de permettre l'utilisation du molybdène ou du TZM en température et sous air pour tous types d'applications.

Un autre but de l'invention est de prévenir l'apparition de fissures dans le revêtement de protection.

Un autre but est de réaliser un revêtement adhérant à la surface du substrat utilisé.

Un autre but de l'invention est de proposer une solution s'adaptant à tout type de géométrie.

Un autre but de l'invention est de proposer une solution aisément réalisable, dans le but de limiter les coûts et de maximiser les volumes de production.

A cet effet, l'invention propose un procédé de revêtement d'une pièce en alliage réfractaire selon la revendication 1.

L'invention peut être avantageusement complétée par les caractéristiques suivantes, prises seules ou en combinaison :
- le revêtement céramique obtenu par conversion est retiré par action mécanique ou chimique pour ne laisser que le revêtement d'alliage formé par diffusion solide ; dans cette configuration, le revêtement final ne comporte plus que la seule couche d'alliage formée par diffusion solide de ou des charges actives dans la pièce lors du traitement thermique de conversion ; le/les polymère(s) précéramique(s) dans la composition de traitement joue(nt) alors le rôle de véhicule aux charges actives incorporées dans la composition de traitement ; la très bonne tenue en température des polymères précéramiques (jusqu'à 1350°C) permet d'assurer le contact des charges actives à la surface de la pièce et permet la diffusion solide sur une large plage de température (200-1350°C) ;
- la composition de traitement comporte en outre des charges dites passives configurées pour moduler le coefficient de dilatation du revêtement de manière à présenter un écart entre le coefficient de dilatation d'un substrat et le coefficient de dilatation du revêtement inférieur à 3.10⁻⁶ K⁻¹ ;
- le procédé comporte au moins une première et une deuxième étapes d'enduction consécutives, et au moins une étape de réticulation réalisée entre deux étapes d'enduction consécutives, l'étape de réticulation étant configurée pour générer un réseau polymère infusible capable de supporter les étapes ultérieures de la pyrolyse, la deuxième étape d'enduction étant appliquée pour obtenir une couche plus épaisse ;
- la composition de traitement mise en œuvre lors de la deuxième étape d'enduction présente une viscosité inférieure à la viscosité de la composition de traitement utilisée lors de la première étape d'enduction ;
- l'étape de réticulation est réalisée en présence d'air à une température supérieure ou égale à la température de réticulation la plus élevée parmi les différentes températures de réticulation des différentes espèces de polymère précéramique de la solution de traitement ;
- l'alliage réfractaire comporte du molybdène, et dans lequel le revêtement est configuré pour protéger l'alliage réfractaire des phénomènes de diffusion ;
- l'étape de traitement thermique comporte les étapes de :
   - Réticulation à une première température configurée pour évaporer le solvant et accélérer la réticulation,
   - Conversion réalisée à une deuxième température configurée pour convertir le polymère en céramique et éliminer les espèces organiques, de manière à obtenir une céramique ayant une structure amorphe,
   - Structuration réalisée à une troisième température, configurée pour convertir la céramique de structure amorphe en céramique ayant une structure cristalline ;
- l'étape de traitement thermique est réalisée sous atmosphère contrôlée de manière à éviter l'oxydation du noyau de fonderie tout en ayant une pression partielle d'oxygène suffisante pour assurer la conversion du polymère précéramique en céramique oxycarbure ou céramique oxyde ;
- le procédé comporte une ou plusieurs étapes d'enduction et une étape de céramisation réalisée entre deux étapes d'enduction (3) consécutives, l'étape d'enduction étant configurée pour combler/cicatriser les défauts et la porosité susceptibles d'être générés par l'étape de céramisation ;
- la composition de traitement comporte, par rapport à la masse totale de la composition de traitement :
   - Une proportion massique comprise entre 45% et 70% d'un solvant,
   - Une proportion massique comprise entre 15% et 40% d'un polymère précéramique,
   - Une proportion massique comprise entre 10% et 30% d'une charge passive ;
- la composition de traitement comporte, par rapport à la masse totale de la composition de traitement :
   - Une proportion massique comprise entre 30% et 70% d'un solvant,
   - Une proportion massique comprise entre 15% et 40% d'un polymère précéramique de polysiloxane, présentant un taux de conversion théorique en céramique en dioxyde de silicium,
   - Une proportion massique comprise entre 15% et 60% d'aluminium de granulométrie inférieure à 20 microns ;

Selon un autre aspect, l'invention concerne une pièce mécanique en alliage réfractaire comportant un revêtement réalisé par un procédé de revêtement selon l'invention.

Optionnellement, la pièce est un noyau de fonderie en alliage réfractaire.

### PRÉSENTATION DES FIGURES

D'autres caractéristiques et avantages de l'invention ressortiront encore de la description qui suit, laquelle est purement illustrative et non limitative, et doit être lue en regard des figures annexées sur lesquelles :
- la figure 1 est une représentation schématique des étapes d'un revêtement au moyen d'un polymère précéramique selon l'art antérieur ;
- la figure 2 est un diagramme d'état d'un polymère précéramique en fonction de la viscosité et de la température ;
- la figure 3 est une représentation de type schéma bloc des étapes d'un procédé de revêtement d'une pièce conforme à l'invention ;

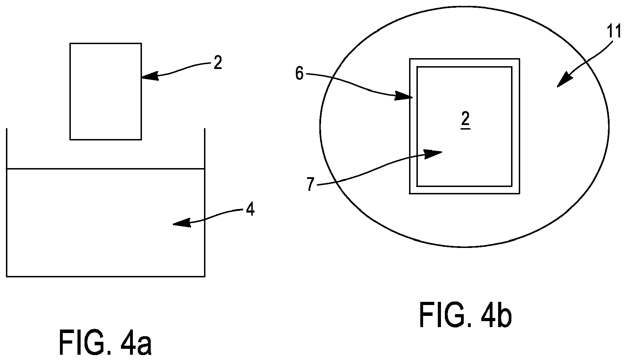

- la figure 4 est une représentation schématique d'un dispositif de revêtement conforme à l'invention ; plus précisément la figure 4a représente un dispositif d'enduction, et la figure 4b représente un dispositif de traitement thermique.

### DESCRIPTION D'UN OU PLUSIEURS MODES DE MISE EN ŒUVRE ET

### DE RÉALISATION

L'invention peut s'appliquer à tout type de pièce, notamment en molybdène ou alliage réfractaire, comportant comme élément majoritaire du molybdène par exemple l'alliage titane-zirconium-molybdène(TZM), soumises à des conditions d'oxydation, notamment en présence de températures importantes (supérieures à 400°C) et d'air.

L'invention s'applique à un procédé 1 de revêtement d'une pièce 2 en alliage réfractaire, comprenant les étapes de :
a. Enduction 3 d'au moins une zone de la pièce 2 à l'aide d'une composition de traitement 4, la composition de traitement 4 comportant un polymère précéramique et un solvant,
b. Traitement thermique 5 de la pièce 2 enduite de composition de traitement 4, le traitement thermique 5 étant configuré pour convertir le polymère précéramique en céramique et former un revêtement 6 recouvrant un substrat 7, le revêtement 6 étant configuré pour protéger le substrat 7 de l'oxydation et de la diffusion.

La pièce 2 est ainsi recouverte au moins partiellement d'un revêtement 6 configuré pour le protéger de l'oxydation qui peut apparaître notamment lors des différents procédés de fonderie nécessaires pour fabriquer une aube de turbine, et dont certaines étapes (cuisson du noyau céramique/ cuisson de la carapace) sont effectuées à haute température et en présence d'air.

L'invention peut avantageusement s'appliquer à un noyau de fonderie en alliage réfractaire pour la réalisation d'une aube de turbomachine en superalliage.

### Enduction

Le revêtement 6 peut être réalisé suivant un procédé 1 comportant une ou plusieurs étapes d'enduction 3, pouvant être réalisées par une même ou différentes méthodes.

Le choix de la méthode d'enduction dépend de la propriété de la composition de traitement 4, notamment la composition de ladite solution, sa viscosité au cours de l'étape d'enduction 3, et l'atmosphère dans laquelle se trouvera la pièce 2 lors de l'étape de traitement thermique 5.

Certains paramètres de la pièce 2 influent également sur le choix de la méthode d'enduction, notamment la taille de la pièce 2, la complexité de sa géométrie, et l'état de surface de la pièce 2 lors de l'étape d'enduction 3.

De plus, l'épaisseur de la couche souhaitée influe sur le choix de la méthode d'enduction.

Par exemple, le dépôt par centrifugation permet d'obtenir une fine couche homogène sur une surface plane d'une pièce 2.

L'épaisseur de la couche peut être ajustée en modifiant la vitesse de rotation de la pièce 2.

Pour réaliser une couche épaisse, il est également possible d'adapter la viscosité de la composition de traitement 4, en plus de diminuer la vitesse de rotation de la pièce 2.

Alternativement, pour des géométries complexes, l'étape d'enduction 3 peut être réalisée par trempage, la pièce étant trempée dans un bain de composition de traitement 4, de manière à recouvrir la totalité de la surface de la pièce d'une couche de composition de traitement 4.

Alternativement, l'étape d'enduction 3 peut être réalisée par pulvérisation. Un dispositif de pulvérisation projette localement une composition de traitement 4 sur une zone de la pièce à traiter, de manière à recouvrir ladite zone d'une couche de composition de traitement 4.

La pulvérisation s'applique avantageusement à des pièces présentant des géométries complexes, en particulier lorsqu'il n'est pas nécessaire ou que l'on veut éviter de réaliser un revêtement 6 sur la totalité de la surface de la pièce 2.

Les méthodes d'enduction par trempage ou par pulvérisation conviennent également à des pièces présentant une géométrie simple.

### Composition de traitement

La composition de traitement 4 peut comporter du polymère précéramique mis en suspension dans un solvant.

Le polymère précéramique comporte avantageusement des polysiloxanes à haut rendement de céramisation qui se convertissent en silice (SiO₂) ou oxycarbure de silicium (Si-O-C) par thermolyse mais peuvent être également des polysilazanes ou des polycarbosilanes. Par haut rendement de céramisation, il est entendu que le taux de conversion théorique en céramique en dioxyde de silicium SiO₂ ou en oxycarbure de silicium Si-O-C est d'au moins 70% en masse, préférentiellement d'au moins 80%.

On peut citer par exemple et préférentiellement les siloxanes de référence commerciale SILRES^{®} de la société Wacker.

Optionnellement, le solvant utilisé est organique, et peut comprendre par exemple un des solvants ou une combinaison d'une sélection de solvants parmi les éthers de glycol, le terpinéol, la butanone, la méthyléthylcétone (MEK), l'acétone, le benzène, le xylène, le toluène ou d'autres solvants organiques non listés ci-dessus.

Il est possible d'adapter la viscosité de la composition de traitement 4 en modifiant le type de solvant utilisé, ou la proportion de solvant dans la composition de traitement 4.

En fonction de la quantité et le type du solvant, l'épaisseur de la couche de revêtement 6 dérivée du polymère précéramique appliqué lors d'une phase d'enduction 3 peut varier entre 0.1 et 50 µm.

Ainsi l'épaisseur de la couche de revêtement 6 est inférieure à une épaisseur critique en-dessous de laquelle le revêtement 6 reste intact et adhère sur le substrat 7, et au-dessus de laquelle des phénomènes de fissuration et de délamination surviennent pendant l'étape de traitement thermique 5.

### Couches multiples

Pour obtenir des revêtements épais sans défauts jusqu'à une épaisseur de plusieurs centaines de microns, il est possible de réaliser plusieurs étapes successives d'enduction 3, réalisant une pluralité de couches déposées avec ou sans traitement thermique intermédiaire.

La viscosité de la composition de traitement 4 sera avantageusement réduite à chaque itération d'enduction 3 afin de combler la porosité de la couche précédente.

Entre chaque passe d'enduction 3, une étape de réticulation 8 du revêtement peut avantageusement être réalisée.

Au cours de l'étape de réticulation 8, la pièce 2 est chauffée en présence d'air à une température de réticulation (100 à 200°C) du ou des polymères précéramiques contenus dans la composition de traitement 4.

Si les polymères précéramiques mis en œuvre ont une température de réticulation différente, la réticulation 8 sera réalisée à la température de réticulation la plus élevée parmi les températures de réticulation des espèces en présence.

L'enduction d'une pièce 2 est réalisée avec autant de passes d'enduction 3 nécessaires à l'obtention d'un revêtement 6 couvrant.

### Particules dites « charges »

Afin de former un revêtement dense et dénué de fissures traversantes qui mettraient le métal au contact de l'atmosphère oxydante, des particules dites « charges » peuvent être ajoutées dans la composition de traitement 4.

Les charges permettent notamment d'éviter un retrait important pendant la céramisation et d'ajuster les propriétés du revêtement 6 vis-à-vis du substrat 7.

La composition de traitement 4 peut donc comporter une ou plusieurs charges dites actives ou passives.

Une charge passive permet d'éviter un retrait excessif causé par la céramisation lors du traitement thermique 5.

Les charges passives permettent également de moduler le coefficient de dilatation du revêtement 6 en fonction des propriétés du substrat 7, notamment de manière à éviter les gradients de coefficients de dilatation thermique à l'interface entre le revêtement 6 et le substrat 7. Une différence de coefficient d'expansion thermique inférieure à 1-3.10^-6 K⁻¹ entre le substrat 7 et le revêtement 6 permet d'éviter la délamination et la fissuration lors des traitements thermiques.

En effet, une brusque variation de coefficient de dilatation thermique peut entraîner une délamination ou un décollement du revêtement 6 au cours de variations thermiques importantes.

Optionnellement, mais avantageusement dans le cas où la pièce 2 est un noyau de fonderie en alliage réfractaire, la ou les charges passives comportent des charges céramiques issues en partie ou totalement de la composition des noyaux céramiques classiquement utilisés, par exemple du zircon, de l'alumine ou de la silice, mais également d'autres oxydes, par exemple des aluminosilicates, de la calcite, de la magnésie, ou d'autres espèces non listées ou un mélange de ceux-ci. Des exemples de compositions céramiques peuvent être trouvés dans le brevet US 5043014.

Ainsi, au cours du démoulage d'un produit de fonderie, le décochage des noyaux de fonderie peut être simplifié.

En effet, une opération de dissolution de noyaux céramiques, classiquement réalisée au moyen d'un dissolvant basique, permet également la dissolution du revêtement du polymère précéramique obtenu pour une telle composition de composition de traitement 4, permettant de retirer les noyaux en alliage réfractaire sans étape intermédiaire.

Une charge active est configurée pour réagir avec les produits de décomposition du polymère précéramique pour empêcher le retrait et le substrat 7 pour former un alliage configuré pour générer une couche d'oxyde protectrice lorsque la pièce 2 est exposée à un milieu oxydant.

La composition de traitement 4 peut comporter une ou plusieurs charges actives métalliques capables de former par diffusion solide un alliage avec le substrat 7 et cet alliage est capable de générer une couche d'oxyde passivante lorsqu'elle est soumise à des conditions oxydantes.

Plus précisément, les charges actives métalliques présentes dans la composition de traitement 4 vont migrer par diffusion vers l'alliage réfractaire composant la pièce 2 au cours du traitement thermique.

Lesdites charges actives vont ensuite former un alliage avec au moins une des espèces de l'alliage réfractaire, l'alliage étant réparti selon une couche se situant sous la couche de céramique.

Ainsi, au cours du cycle de vie de la pièce 2, dans le cas où la couche de céramique présente des porosités ouvertes permettant à l'oxygène de la traverser ou si la couche vient à s'écailler ou se fissurer, l'alliage formé est exposé localement aux conditions extérieures. Lorsque les conditions du milieu sont oxydantes, l'alliage génère en surface une couche d'oxyde passivante, apte à protéger la pièce contre l'oxydation et la diffusion d'espèces extérieures.

Cet effet de cicatrisation permet donc d'augmenter grandement la durée de vie de la pièce 2.

Les charges métalliques actives peuvent avantageusement contenir une ou une combinaison de plusieurs des espèces listées ci-après :
- Une poudre de silicium,
- Une poudre d'aluminium,
- Une poudre de fer,
- Une poudre de cuivre,
- Une poudre de cobalt,
- Une poudre de nickel,
- Une poudre de lanthane
- Une poudre de germanium,
- Une poudre de zirconium,
- Une poudre de chrome,
- Une poudre de titane,
- Une poudre d'hafnium,
- Une poudre de lanthane,
- Une poudre de rhénium.

Afin d'obtenir un revêtement homogène et d'optimiser la surface de contact entre les charges actives et le support 7 et faciliter la diffusion, la granulométrie des charges actives sera inférieure choisie inférieure à 20 microns. Si nécessaire un broyage des charges actives peut être réalisé pour abaisser la granulométrie sous ce seuil de 20 microns.

Les alliages formés à la surface 6 par diffusion solide des charges actives de la composition 4 dans le support 7 sont les composés thermodynamiquement stables capables de se former. Les alliages possibles d'être formé sont définis par les diagrammes de phases entre ses charges actives et le support 7.

En exemple, la composition du traitement 4 pourra contenir une charge silicium et une charge germanium qui forment tous deux une solution solide en toutes proportions pour constituer un alliage Siₓ-Ge₁₋ₓ par diffusion solide. L'alliage Siₓ-Ge₁₋ₓ pourra réagir avec le support 7 à base molybdène pour former le composé défini Mo(SiₓGe₁₋ₓ)₂. Cette phase est susceptible de former une couche passivante de silice en condition oxydante.

En autre exemple, les charges actives chrome et cobalt peuvent entrer dans la composition du traitement 4 dans des proportions adaptées pour former par diffusion solide au contact du support base molybdène 7 un alliage ternaire Co-Cr-Mo contenant 26 à 30 % en poids de chrome et 5 à 7 % en poids de molybdène (le solde en cobalt). Cet alliage présente une excellente résistance à la fatigue et à la corrosion en formant une couche passivante d'oxyde de chrome (III), Cr₂O₃.

En autre exemple, une charge active de titane peut entrer dans la composition du traitement 4 pour former par diffusion solide avec le support 7 une solution solide de titane dans le molybdène qui peut contenir jusqu'à 20-22% molaire de titane. Si la teneur en Titane dans la couche est supérieure, le système devient binaire avec une solution solide de titane-molybdène à laquelle s'ajoute une phase de titane pur à température ambiante. La solution solide Ti-Mo, comme la phase titane si présente formeront une couche d'oxyde passivante TiO₂ en condition oxydante capable de limiter l'oxydation du support 7.

Au moins un des composés formés par diffusion solide entre la ou les charge(s) active(s) et le substrat 7 doit être capable de former une couche passivante et couvrante à la surface de la pièce 2.

Ainsi, le silicium dans la composition de traitement 4 conduit à la formation d'une phase de silicium-molybdène MoₐSi_{b}, qui va former une couche passivante de silice lorsqu'elle sera exposée à des conditions oxydantes. Il est connu que la silice réagit fortement avec les éléments réactifs du superallliage (Al, Hf, Ti, etc.). La couche de céramique également formée au-dessus de la couche de siliciure permet d'empêcher toute réactivité entre la silice formée en condition oxydante lors de la cuisson noyau et carapace avec le superalliage. Ainsi la couche de silice assure la protection à l'oxydation tandis que la couche céramique est une protection vis-à-vis du superalliage.

L'aluminium dans la composition de traitement 4 conduit à la formation d'une phase d'un alliage aluminium-molybdène MoₐAl_{b}, qui va former une couche passivante d'alumine lorsqu'elle sera exposée à des conditions oxydantes.

L'ajout d'aluminium et de silicium dans la composition de traitement 4 conduit à la formation d'une phase d'alliage aluminium-silicium-molybdène MOₐAl_{b}Si_{c}. La phase Mo(Si,Al)₂ en particulier permet de former majoritairement de l'alumine ou de la silice en conditions oxydantes en fonction des teneurs respectives en aluminium et silicium.

Le nickel dans la composition de traitement 4 conduit à la formation d'une phase d'un alliage nickel-molybdène MoₐNi_{b} qui va former une couche passivante d'oxyde de nickel lorsqu'elle sera exposée à des conditions oxydantes.

Le chrome dans la composition de traitement 4 conduit à la formation d'une phase d'un alliage chrome-molybdène MoₐCr_{b} qui va former une couche passivante de chromine lorsqu'elle sera exposée à des conditions oxydantes.

De manière similaire, les charges actives métalliques listées précédemment forment un alliage avec le molybdène du substrat 7, qui génère une couche d'oxydes protectrice à la surface de la pièce 2.

Ces éléments métalliques ajoutés dans la composition de traitement 4 peuvent également être combinés pour former un revêtement d'alliage ternaire MoₐX_{b}Y_{c}, quaternaire MOₐX_{b}Y_{c}Z_{d} (où X, Y et Z correspondent à des espèces chimiques différentes, préférentiellement choisies parmi les espèces listées précédemment) ou tout autre type d'alliage complexe.

Il est donc possible de revêtir des formes complexes de polymère précéramique avec un coût de procédé maîtrisé.

### Traitement thermique

Le procédé de transformation des polymères précéramiques en céramiques est une approche complexe. Plusieurs facteurs peuvent varier et modifier la composition, la microstructure, la densité, le rendement céramique et les propriétés des céramiques issues de polymères précéramiques. Parmi ces facteurs :
- La rhéologie, le rendement céramique, la réactivité et le degré de réticulation du précurseur
- Atmosphère de pyrolyse (inerte/réactive/vide) durant la mise en forme et/ou durant la céramisation
- La pression du gaz durant la céramisation
- La vitesse du chauffage
- La température du chauffage
- Temps du palier

Consécutivement à l'étape d'enduction 3, le polymère précéramique de la composition de traitement 4 est converti par un traitement thermique 5 en céramique.

La pièce 2 est disposée dans une enceinte 11 qui est portée à une température requise pour le traitement.

Optionnellement, l'enceinte 11 est hermétique et contient un gaz inerte pour le substrat 7 ou la composition de traitement 4.

Le traitement thermique 5 du polymère précéramique et le frittage de la charge céramique sont préférentiellement réalisés dans une atmosphère non oxydante pour la pièce 2, mais dont la pression partielle d'oxygène est suffisante pour convertir le polymère précéramique en céramique oxycarbure ou en céramique oxyde.

Par exemple, la gamme de pression partielle du dioxygène peut être comprise entre 10⁻¹⁵ bar et 10⁻³⁰ bar pour un traitement de pyrolyse effectué à 1350°C.

Le traitement thermique 5 peut comporter plusieurs étapes.

Une étape de réticulation 8 est préférentiellement réalisée après l'étape d'enduction 3 et antérieurement à toute autre étape de traitement thermique 5.

L'étape de réticulation 8 permet notamment de vaporiser le solvant et engendrer la réticulation du polymère précéramique. Cette étape de réticulation engendre une teneur faible en groupements organiques qui améliore le rendement céramique et évite les variations trop brutales de la densité et du volume au cours de la conversion.

Ce traitement est réalisé entre 100 et 400°C préférentiellement à une température avoisinant les 200°C.

Optionnellement, la réticulation peut être induite par un rayonnement ultraviolet.

Une étape de conversion 9 est réalisée de manière à convertir le polymère en céramique. Cette conversion conduit à la décomposition et l'élimination des fractions organiques (i.e. méthyle, éthyle, phényle ou vinyle) et des groupes Si-H ou Si-NHx au cours du traitement.

L'étape de conversion 9 est préférentiellement réalisée à une température comprise entre 600 et 800°C.

Après l'étape de conversion 9 une structure amorphe est obtenue.

Consécutivement à l'étape de conversion 9, une étape de structuration 10 est réalisée, à une température configurée pour définir la structure cristalline finale, la microstructure et les propriétés du revêtement 6.

Préférentiellement, l'étape de structuration 10 est réalisée à une température comprise entre 1000°C et 1350°C.

Différentes techniques de traitement peuvent être employées pour réaliser une ou plusieurs étapes du traitement thermique 5.

La pyrolyse induite par un laser est avantageusement utilisée pour des substrats ayant une faible température de fusion, et pour générer des dépôts céramiques avec des compositions spécifiques.

Le traitement par un faisceau d'ions est avantageusement utilisé afin de maîtriser la rupture des liaisons chimiques et la réticulation du polymère précéramique.

Le traitement thermique 5 de la pièce 2 (molybdène ou d'alliage de molybdène) revêtue est configuré pour assurer la conversion en céramique de tout ou une partie du polymère précéramique contenu dans le revêtement 6, et pour permettre le frittage de la charge céramique présente dans le revêtement 6 afin d'obtenir un dépôt dense (densité relative > à 80%).

### Exemple de réalisation d'un revêtement :

Un exemple de composition de traitement 4 pour une enduction 3 par trempage comprend :
- Une proportion massique comprise entre 45% et 70% de solvant Terpineol, préférentiellement entre 50% et 65%, par exemple de 53%,
- Une proportion massique comprise entre 15% et 40% de SILRES MK^{®} (polymère précéramique de polysiloxane, présentant un taux de conversion théorique en céramique en dioxyde de silicium SiO₂ ou en oxycarbure de silicium Si-O-C de 80% en masse), préférentiellement entre 20% et 35%, par exemple de 27%,
- Une proportion massique comprise entre 10% et 30% de silice fine (par fine, il est entendu par exemple que 10% des grains présentent un diamètre inférieur à 3 microns, 50% des grains présentent un diamètre inférieur à 11 microns, et 10% des grains présentent un diamètre supérieur à 38 microns), préférentiellement entre 15% et 25%, par exemple de 20%.

Dans un premier temps la dissolution du polymère précéramique dans le Terpineol est réalisée à 60°C sous agitation magnétique dans un bécher pendant 30 minutes minimum. La poudre de silice fine est ensuite ajoutée et l'agitation maintenue au moins 12 heures.

La composition de traitement 4 est ensuite refroidie et stabilisée entre 19 et 21°C pendant la phase de trempage et également maintenue sous agitation magnétique.

La pièce 2 molybdène ou d'alliage de molybdène est introduite dans la composition de traitement 4 à la vitesse de 50 mm/min, maintenue 30 secondes dans la formulation puis sortie à une vitesse de 10 mm/min.

Lorsque la pièce 2 est totalement émergée de la formulation, celle-ci est séchée à l'air chaud (150-220°C) jusqu'à évaporation du solvant et permettre la manutention de la pièce 2 revêtue.

La pièce 2 ainsi revêtue est réticulée sous air, 1 heure à 200°C avant de réaliser un deuxième trempage dans une formulation plus diluée afin d'obtenir un dépôt couvrant et boucher la porosité éventuelle après la première étape d'enduction 3. La teneur massique en solvant dans la formulation plus diluée sera augmentée entre 5 et 15% par rapport à la formulation initiale, par exemple passant de 53 pds% à 60 pds%.

Un deuxième exemple de composition de traitement 4 contient :
- Une proportion massique comprise entre 40% et 70% de solvant Terpineol, préférentiellement entre 50% et 65%, par exemple de de 50%,
- Une proportion massique comprise entre 15% et 40% de SILRES MK^{®} (polymère précéramique de polysiloxane, présentant un taux de conversion théorique en céramique en dioxyde de silicium SiO₂ ou en oxycarbure de silicium Si-O-C de 80% en masse), préférentiellement entre 20% et 35%, par exemple de 25%,
- Une proportion massique comprise entre 10% et 35% de silicium, par exemple de 25% en masse et de granulométrie inférieure à 20 microns, préférentiellement inférieure à 10 microns.

Un autre exemple de composition de traitement 4 comporte, par rapport à la masse totale de la suspension :
- Une proportion massique comprise entre 30% et 70% d'un solvant, préférentiellement entre 35% et 45%
- Une proportion massique comprise entre 15% et 40%, préférentiellement entre 15% et 25%, de polymère précéramique de polysiloxane, présentant un taux de conversion théorique en céramique en dioxyde de silicium SiO2 ou en oxycarbure de silicium Si-O-C de 80% en masse,
- Une proportion massique comprise entre 15% et 60% d'aluminium, préférentiellement entre 35% et 50%, par exemple de 44.5% en masse et de granulométrie inférieure à 20 microns, préférentiellement inférieure à 10 microns.

Une telle composition permet d'améliorer le pouvoir de protection du revêtement formé après traitement thermique.

Cela permet par exemple de réaliser une pièce mécanique en alliage réfractaire comportant une couche réactive continue avec une phase de d'alliage Molybdène Silicium Aluminium Mo(Si,AI)2 capable de générer une couche d'alumine protectrice lorsqu'il est soumis à des conditions oxydantes, protégeant ainsi la pièce d'une oxydation plus profonde.

La préparation de la composition de traitement 4 suivant le deuxième exemple de composition et l'enduction 3 par trempage sont réalisées dans les mêmes conditions que pour le premier exemple de composition (vitesse, température).

Après une première enduction 3, la pièce est séchée à l'air chaud (150-220°C) puis réticulée à l'air 1 heure à une température comprise entre 170 et 230°C, par exemple 200°C.

Si nécessaire, des étapes supplémentaires de trempage/ séchage/réticulation peuvent être ajoutées avec la deuxième formulation pour obtenir un dépôt couvrant suivant la complexité des pièces à revêtir. De cette manière, les fissures éventuelles d'une première couche du revêtement seront comblées par une couche de revêtement supplémentaire, réalisant ainsi un revêtement sans fissure.

Le traitement thermique 5 doit conduire à la céramisation du SILRES MK^{®} et au frittage de la silice contenue dans le revêtement 6 dans le cas où la charge incorporée dans la composition 4 est une charge passive de silice (premier exemple). Si la charge entrant dans la composition 4 est une charge active de silicium (2^{ème} exemple), le traitement thermique doit permettre l'interdiffusion à l'état solide du silicium dans le support molybdène ou base molybdène pour former un siliciure de molybdène (alliage molybdène-silicium). Dans l'un ou l'autre des cas, les traitements thermiques peuvent optionnellement être réalisés au cours d'un même cycle thermique dans un four tubulaire en alumine sous balayage d'argon à un débit de 35 à 40 L/h.

Cela permet notamment de réduire le nombre d'étapes du procédé et ainsi de réduire sa durée et donc son coût.

Dans cet exemple, le cycle thermique imposé à la pièce 2 revêtue comporte des rampes de montée et descente en température de 200°C/h et un palier de 25 heures à 1350°C pour la composition 4 comprenant une charge passive de silice fine et un palier de 10 heures à 1250°C pour la composition 4 comprenant une charge active de silicium.

De cette manière, la pièce 2 est recouverte d'un revêtement 6 configuré pour protéger la pièce de l'oxydation et des phénomènes d'inter-diffusion lorsque la pièce 2 est au contact d'un corps comportant des espèces susceptibles de diffuser dans le substrat 7, et inversement.

Cet effet est particulièrement intéressant pour les noyaux de fonderie en alliage réfractaire, notamment ceux utilisés pour la fabrication en fonderie d'aubes de turbomachines en superalliage. L'inter-diffusion des espèces entre le noyau et le superalliage est empêchée par le revêtement 6 tout céramique dans l'exemple 1 et métal/céramique (siliciure + oxycarbure de silicium) dans l'exemple 2, et l'oxydation du noyau est également limitée par le revêtement 6.

## Revendications

1. Procédé (1) de revêtement d'une pièce (2) en alliage réfractaire, comprenant les étapes de :
- Enduction (3) d'au moins une zone de la pièce (2) à l'aide d'une composition de traitement (4), la composition de traitement (4) comportant au moins un type de polymère précéramique et un solvant,
- Traitement thermique (5) de la pièce (2) enduite de la composition de traitement (4), le traitement thermique (5) étant configuré pour convertir au moins partiellement le polymère précéramique en céramique et former un revêtement (6), le revêtement (6) étant configuré pour protéger l'alliage réfractaire de l'oxydation
et dans lequel la composition de traitement (4) comporte également des charges dites actives configurées pour migrer par diffusion vers l'alliage réfractaire au cours du traitement thermique et former un alliage en surface de la pièce (2), l'alliage étant situé entre la pièce (2) et la céramique obtenue par conversion, l'alliage étant configuré pour générer une couche d'oxyde protectrice lorsqu'il est soumis à des conditions oxydantes.

2. Procédé (1) selon la revendication 1, dans lequel le revêtement céramique obtenu par conversion est retiré par action mécanique ou chimique pour ne laisser que le revêtement d'alliage formé par diffusion solide.

3. Procédé (1) selon l'une des revendications précédentes, dans lequel la composition de traitement (4) comporte en outre des charges dites passives configurées pour moduler le coefficient de dilatation du revêtement (6) de manière à présenter un écart entre le coefficient de dilatation d'un substrat (7) et le coefficient de dilatation du revêtement (6) inférieur à 3.10^-6 K⁻¹.

4. Procédé (1) selon l'une des revendications précédentes, dans lequel le procédé comporte au moins une première et une deuxième étapes d'enduction (3) consécutives, et au moins une étape de réticulation (8) réalisée entre deux étapes d'enduction (3) consécutives, l'étape de réticulation (8) étant configurée pour générer un réseau polymère infusible capable de supporter des étapes ultérieures de pyrolyse, la deuxième étape d'enduction (3) étant appliquée pour obtenir une couche plus épaisse.

5. Procédé (1) selon la revendication 4, dans lequel la composition de traitement (4) mise en œuvre lors de la deuxième étape d'enduction (3) présente une viscosité inférieure à la viscosité de la composition de traitement (4) utilisée lors de la première étape d'enduction (3).

6. Procédé (1) selon l'une des revendications 4 ou 5, dans lequel l'étape de réticulation (8) est réalisée en présence d'air à une température supérieure ou égale à la température de réticulation la plus élevée parmi les différentes températures de réticulation des différentes espèces de polymère précéramique de la solution de traitement (4).

7. Procédé selon l'une des revendications précédentes, dans lequel l'alliage réfractaire comporte du molybdène, et dans lequel le revêtement est configuré pour protéger l'alliage réfractaire des phénomènes de diffusion.

8. Procédé (1) selon l'une des revendications précédentes, dans lequel l'étape de traitement thermique (5) comporte les étapes de :
- Réticulation (8) à une première température configurée pour évaporer le solvant et accélérer la réticulation ;
- Conversion (9) réalisée à une deuxième température configurée pour convertir le polymère en céramique et éliminer les espèces organiques, de manière à obtenir une céramique ayant une structure amorphe ;
- Structuration (10) réalisée à une troisième température, configurée pour convertir la céramique de structure amorphe en céramique ayant une structure cristalline.

9. Procédé (1) selon l'une des revendications précédentes, dans lequel le procédé comporte une ou plusieurs étapes d'enduction (3) et une étape de céramisation (9) réalisée entre deux étapes d'enduction (3) consécutives, l'étape d'enduction (3) étant configurée pour combler/cicatriser les défauts et la porosité susceptibles d'être générés par l'étape de céramisation.

10. Procédé (1) selon l'une des revendications précédentes, dans lequel l'étape de traitement thermique (5) est réalisée sous atmosphère contrôlée de manière à éviter l'oxydation du noyau de fonderie tout en ayant une pression partielle d'oxygène suffisante pour assurer la conversion du polymère précéramique en céramique oxycarbure ou céramique oxyde.

11. Procédé selon l'une des revendications précédentes, dans lequel la composition de traitement (4) comporte, par rapport à la masse totale de la composition de traitement (4) :
- Une proportion massique comprise entre 45% et 70% d'un solvant,
- Une proportion massique comprise entre 15% et 40% d'un polymère précéramique,
- Une proportion massique comprise entre 10% et 30% d'une charge passive.

12. Procédé selon l'une des revendications 1 à 11, dans lequel la composition de traitement (4) comporte, par rapport à la masse totale de la composition de traitement (4) :
- Une proportion massique comprise entre 30% et 70% d'un solvant,
- Une proportion massique comprise entre 15% et 40% d'un polymère précéramique de polysiloxane, présentant un taux de conversion théorique en céramique en dioxyde de silicium,
- Une proportion massique comprise entre 15% et 60% d'aluminium de granulométrie inférieure à 20 microns

13. Pièce (2) mécanique en alliage réfractaire comportant un revêtement (6) réalisé par un procédé (1) de revêtement selon l'une des revendications 1 à 12.

14. Pièce (2) mécanique selon la revendication 13, la pièce étant un noyau de fonderie en alliage réfractaire.

## Patentansprüche

1. Verfahren (1) zum Beschichten eines Werkstücks (2) aus einer feuerfesten Legierung, das die folgenden Schritte umfasst:
- Beschichten (3) mindestens eines Bereichs des Werkstücks (2) mit einer Behandlungszusammensetzung (4), wobei die Behandlungszusammensetzung (4) mindestens einen Typ eines präkeramischen Polymers und ein Lösungsmittel enthält,
- Wärmebehandlung (5) des mit der Behandlungszusammensetzung (4) beschichteten Werkstücks (2), wobei die Wärmebehandlung (5) so konfiguriert ist, dass das präkeramische Polymer zumindest teilweise in Keramik umgewandelt wird und eine Beschichtung (6) gebildet wird, wobei die Beschichtung (6) so konfiguriert ist, dass sie die feuerfeste Legierung vor Oxidation schützt
und wobei die Behandlungszusammensetzung (4) auch sogenannte aktive Füllstoffe umfasst, die so konfiguriert sind, dass sie während der Wärmebehandlung durch Diffusion in die feuerfeste Legierung migrieren und eine Legierung auf der Oberfläche des Werkstücks (2) bilden, wobei sich die Legierung zwischen dem Werkstück (2) und der durch Umwandlung erhaltenen Keramik befindet, wobei die Legierung so konfiguriert ist, dass sie eine schützende Oxidschicht erzeugt, wenn sie oxidierenden Bedingungen ausgesetzt ist.

2. Verfahren (1) nach Anspruch 1, bei dem die durch Umwandlung erhaltene keramische Beschichtung durch mechanische oder chemische Einwirkung entfernt wird, so dass nur die durch Festphasendiffusion gebildete Legierungsbeschichtung zurückbleibt.

3. Verfahren (1) nach einem der vorhergehenden Ansprüche, wobei die Behandlungszusammensetzung (4) außerdem sogenannte passive Füllstoffe enthält, die so konfiguriert sind, dass sie den Ausdehnungskoeffizienten der Beschichtung (6) so modulieren, dass eine Abweichung zwischen dem Ausdehnungskoeffizienten eines Substrats (7) und dem Ausdehnungskoeffizienten der Beschichtung (6) von weniger als 3.10^-6 K-1 vorliegt.

4. Verfahren (1) nach einem der vorhergehenden Ansprüche, wobei das Verfahren mindestens einen ersten und einen zweiten aufeinanderfolgenden Beschichtungsschritt (3) und mindestens einen Vernetzungsschritt (8) umfasst, der zwischen zwei aufeinanderfolgenden Beschichtungsschritten (3) durchgeführt wird, wobei der Vernetzungsschritt (8) so konfiguriert ist, dass er ein unschmelzbares Polymernetzwerk erzeugt, das nachfolgenden Pyrolyse-Schritten standhalten kann, wobei der zweite Beschichtungsschritt (3) angewendet wird, um eine dickere Schicht zu erhalten.

5. Verfahren (1) nach Anspruch 4, wobei die im zweiten Beschichtungsschritt (3) eingesetzte Behandlungszusammensetzung (4) eine niedrigere Viskosität aufweist als die Viskosität der im ersten Beschichtungsschritt (3) eingesetzten Behandlungszusammensetzung (4).

6. Verfahren (1) nach einem der Ansprüche 4 oder 5, wobei der Vernetzungsschritt (8) in Gegenwart von Luft bei einer Temperatur durchgeführt wird, die größer oder gleich der höchsten Vernetzungstemperatur unter den verschiedenen Vernetzungstemperaturen der verschiedenen präkeramischen Polymerarten in der Behandlungszusammensetzung (4) ist.

7. Verfahren nach einem der vorhergehenden Ansprüche, wobei die feuerfeste Legierung Molybdän enthält und wobei die Beschichtung so konfiguriert ist, dass sie die feuerfeste Legierung vor Diffusionsphänomenen schützt.

8. Verfahren (1) nach einem der vorhergehenden Ansprüche, wobei der Wärmebehandlungsschritt (5) die folgenden Schritte umfasst:
- Vernetzung (8) bei einer ersten Temperatur, die so konfiguriert ist, dass das Lösungsmittel verdampft und die Vernetzung beschleunigt wird ;
- Umwandlung (9), die bei einer zweiten Temperatur durchgeführt wird, die so konfiguriert ist, dass sie das Polymer in Keramik umwandelt und die organischen Spezies entfernt, um eine Keramik mit einer amorphen Struktur zu erhalten ;
- Strukturierung (10), die bei einer dritten Temperatur durchgeführt wird, die so konfiguriert ist, dass sie die Keramik mit amorpher Struktur in eine Keramik mit kristalliner Struktur umwandelt.

9. Verfahren (1) nach einem der vorhergehenden Ansprüche, wobei das Verfahren einen oder mehrere Beschichtungsschritte (3) und einen Keramisierungsschritt (9) umfasst, der zwischen zwei aufeinanderfolgenden Beschichtungsschritten (3) durchgeführt wird, wobei der Beschichtungsschritt (3) so konfiguriert ist, dass er Defekte und Porosität, die durch den Keramisierungsschritt erzeugt werden können, auffüllt/heilt.

10. Verfahren (1) nach einem der vorhergehenden Ansprüche, wobei der Wärmebehandlungsschritt (5) in einer kontrollierten Atmosphäre durchgeführt wird, um eine Oxidation des Gießereikerns zu vermeiden, während ein ausreichender Sauerstoffpartialdruck herrscht, um die Umwandlung des präkeramischen Polymers in Oxycarbidkeramik oder Oxidkeramik zu gewährleisten.

11. Verfahren nach einem der vorhergehenden Ansprüche, wobei die Behandlungszusammensetzung (4), bezogen auf die Gesamtmasse der Behandlungszusammensetzung (4), enthält:
- Einen Massenanteil zwischen 45% und 70% eines Lösungsmittels,
- Ein Massenanteil zwischen 15% und 40% eines präkeramischen Polymers,
- Ein Massenanteil zwischen 10 % und 30 % eines passiven Füllstoffs.

12. Verfahren nach einem der Ansprüche 1 bis 11, bei dem die Behandlungszusammensetzung (4), bezogen auf die Gesamtmasse der Behandlungszusammensetzung (4), enthält:
- Einen Massenanteil zwischen 30 % und 70 % eines Lösungsmittels,
- Einen Massenanteil zwischen 15% und 40% eines präkeramischen Polysiloxanpolymers, das eine theoretische Umwandlungsrate in Siliziumdioxidkeramik aufweist,
- Ein Massenanteil zwischen 15% und 60% Aluminium mit einer Korngröße von weniger als 20 Mikrometern.

13. Mechanisches Teil (2) aus einer feuerfesten Legierung mit einer Beschichtung (6), die durch ein Beschichtungsverfahren (1) nach einem der Ansprüche 1 bis 12 hergestellt wird.

14. Mechanisches Teil (2) nach Anspruch 13, wobei das Teil ein Gießereikern aus einer feuerfesten Legierung ist.

## Claims

1. A method (1) of coating a refractory alloy workpiece (2), comprising the steps of:
- Surface application (3) on at least one area of the workpiece (2) of a treatment composition (4), the treatment composition (4) comprising at least one type of preceramic polymer and a solvent,
- Heat treatment (5) of the workpiece (2) coated with the treatment composition (4), the heat treatment (5) being configured to at least partially convert the preceramic polymer to ceramic and form a coating (6), the coating (6) being configured to protect the refractory alloy from oxidation
and wherein the treatment composition (4) also comprises so-called active fillers configured to migrate by diffusion to the refractory alloy during the heat treatment and form an alloy on the surface of the workpiece (2), the alloy being located between the workpiece (2) and the ceramic, the alloy being configured to generate a protective oxide layer when subjected to oxidizing conditions.

2. The method (1) of claim 1, wherein the ceramic coating obtained by conversion is removed by mechanical or chemical action to leave only the alloy coating formed by solid diffusion.

3. The method (1) according to any of the preceding claims, wherein the treatment composition (4) further comprises so-called passive fillers configured to modulate the coefficient of expansion of the coating (6) so as to have a deviation between the coefficient of expansion of a substrate (7) and the coefficient of expansion of the coating (6) of less than 3.10^-6 K-1.

4. The method (1) according to any of the preceding claims, wherein the process comprises at least a first and a second consecutive surface application steps (3), and at least one cross-linking step (8) carried out between two consecutive surface application steps (3), the cross-linking step (8) being configured to generate an infusible polymeric network able to withstand subsequent pyrolysis steps, the second surface application step (3) being applied to obtain a thicker layer.

5. The method (1) of claim 4, wherein the treatment composition (4) used in the second surface application step (3) has a lower viscosity than the viscosity of the treatment composition (4) used in the first coating step (3).

6. The method (1) according to any of claims 4 or 5, wherein the crosslinking step (8) is performed in the presence of air at a temperature greater than or equal to the highest crosslinking temperature among the different crosslinking temperatures of the different preceramic polymer species in the treatment solution (4).

7. The method of any of the preceding claims, wherein the refractory alloy comprises molybdenum, and wherein the coating is configured to protect the refractory alloy from diffusion phenomena.

8. The method (1) of any of the preceding claims, wherein the heat treatment step (5) comprises the steps of:
- Crosslinking (8) at a first temperature configured to evaporate the solvent and accelerate the crosslinking ;
- Conversion (9) performed at a second temperature configured to convert the polymer to ceramic and remove organic species, so as to obtain a ceramic having an amorphous structure;
- Structuring (10) performed at a third temperature, configured to convert the ceramic to an amorphous structure into a ceramic with a crystalline structure.

9. The method (1) according to any of the preceding claims, wherein the process comprises one or more surface application steps (3) and a ceramization step (9) carried out between two consecutive surface application steps (3), the surface application step (3) being configured to fill/heal the defects and porosity that may be generated by the ceramization step.

10. The method (1) according to any of the preceding claims, wherein the heat treatment step (5) is carried out in a controlled atmosphere so as to avoid oxidation of the foundry core while having a partial pressure of oxygen sufficient to ensure the conversion of the preceramic polymer to oxycarbide ceramic or oxide ceramic.

11. The method according to any of the preceding claims, wherein the treatment composition (4) comprises, relative to the total mass of the treatment composition (4):
- A proportion by weight of between 45% and 70% of a solvent,
- A proportion by weight of between 15% and 40% of a preceramic polymer,
- A proportion by weight of between 10% and 30% of a passive filler.

12. Process according to one of claims 1 to 11, in which the treatment composition (4) comprises, relative to the total mass of the treatment composition (4):
- A proportion by mass of between 30% and 70% of a solvent,
- A proportion by weight of between 15% and 40% of a polysiloxane preceramic polymer, having a theoretical conversion rate to silicon dioxide ceramic,
- A proportion by weight of between 15% and 60% of aluminium with a particle size of less than 20 microns.

13. Mechanical workpiece (2) made of refractory alloy comprising a coating (6) produced by a coating method (1) according to one of claims 1 to 12.

14. Mechanical workpiece (2) according to claim 13, the part being a foundry core made of refractory alloy.
